# FASCICULE DE BREVET EUROPEEN

(11) **EP 1 235 136 B1**
(45) Date de publication et mention de la délivrance du brevet: **01.04.2009**
(21) Numéro de dépôt: 02290282.9
(22) Date de dépôt: 06.02.2002
(51) Int. Cl.: G06F 3/023

(54) **Dispositif de dialogue d'aéronef, pour dialoguer avec un système dudit aéronef**
Dialogvorrichtung eines Luftfahrzeuges zum Dialogieren mit eines Systems des Luftfahrzeuges
Aircraft dialog device for interacting with an aircraft system

(30) Priorité: 26.02.2001 FR 0102567
(43) Date de publication de la demande: 28.08.2002
(73) Titulaire: AIRBUS France, 31060 Toulouse (FR)
(72) Inventeur: Lafon, Jean-François, 31000 Toulouse (FR); Roux, Nicolas, 31500 Toulouse (FR); Luneau, Christine, 31770 Colomiers (FR)
(74) Mandataire: Hauer, Bernard

(56) Documents cités:
- FR-A- 2 743 921
- US-A- 5 548 304
- US-A- 5 923 307
- US-A- 6 072 473
- US-A- 6 112 141
- "METHOD FOR OPTIMAL USER INTERFACE OBJECT NAVIGATION" IBM TECHNICAL DISCLOSURE BULLETIN, IBM CORP. NEW YORK, US, vol. 37, no. 4A, 1 avril 1994 (1994-04-01), page 501 XP000446754 ISSN: 0018-8689
- "AUTOMATED MOUSE POINTER MOVEMENT FUNCTION" IBM TECHNICAL DISCLOSURE BULLETIN, IBM CORP. NEW YORK, US, vol. 36, no. 4, 1 avril 1993 (1993-04-01), pages 433-435, XP000364571 ISSN: 0018-8689

## Description

La présente invention concerne un dispositif de dialogue entre au moins un opérateur d'un aéronef et au moins un système dudit aéronef, ledit système comprenant des fonctions susceptibles d'être déclenchées par ledit dispositif de dialogue, sous l'action de l'opérateur, en vue de leur exécution.

Dans le cadre de la présente invention :
- on entend par "exécution d'une fonction" notamment :
   . la mise en oeuvre d'une commande d'un élément (moteur, éclairage, ...) de l'aéronef ou d'une action particulière ;
   . la saisie de données ;
   . l'accès à des pages d'information sur des écrans ; et/ou
   . l'accès à des informations ou des actions complémentaires sans changer de page ;
- ledit système, par exemple un dispositif de gestion de vol, peut comporter des "procédures" destinées à la navigation, à la communication, à la surveillance et/ou à la gestion du vol de l'aéronef, ainsi que des "procédures" destinées à la gestion d'éléments tels que les moteurs ou l'éclairage ou d'alarmes dudit aéronef.

Le dialogue est réalisé par l'intermédiaire d'au moins une fenêtre qui est visualisée sur au moins un écran, généralement un écran du poste de pilotage, et qui est du type "interactif". Dans le cadre de la présente invention, on entend par "fenêtre interactive" une fenêtre qui comporte des objets (points, plages, valeurs alphanumériques, ...) qui sont sensibles à la présence d'un curseur. Ledit curseur peut être déplacé par un moyen approprié qui est actionnable par un opérateur de l'aéronef, de manière à pouvoir être amené sur un objet sensible afin de le désigner. Lorsqu'un objet sensible est désigné, c'est-à-dire lorsque le curseur est amené sur lui, il est mis en valeur, en particulier par un changement d'apparence tel qu'un changement de couleur ou une surbrillance par exemple. On dit que l'objet sensible est alors muni d'un "focus". L'exécution d'une fonction associée à un objet sensible est déclenchée par la validation (à l'aide d'un moyen approprié actionnable) dudit objet sensible préalablement désigné, c'est-à-dire d'un objet sensible muni d'un "focus". Dans la suite de la description, on dira qu'un objet sensible est "désigné" lorsqu'il sera muni d'un tel "focus".

On connaît différents dispositifs de dialogue susceptibles de réaliser la désignation et la validation d'un objet sensible de ce type.

En particulier, par le brevet FR-2 677 149, on connaît un dispositif pour la révision du plan de vol latéral d'un aérodyne. Ce dispositif connu comprend un dispositif de désignation muni d'un organe de validation, qui est couplé au processeur du système de gestion de vol de l'aérodyne de manière à obtenir sur l'écran de ce système, en plus de la représentation géographique du plan de vol initialement sélectionné par le pilote :
- une zone sensible associée à chaque point de l'écran ;
- des plages de fonction dynamiques servant à composer des menus, la fonction attribuée à chacune de ces plages pouvant varier d'un menu à l'autre et étant indiquée sur l'afficheur en correspondance avec cette plage ; et
- un index lumineux dont les déplacements sur l'écran sont commandés par une action du pilote sur le dispositif de désignation, de manière à pouvoir amener l'index sur une plage ou une zone sensible, l'activation de la fonction correspondante à cette plage ou la sélection d'un point de ladite zone étant obtenue par une action du pilote sur l'organe de validation.

Le dispositif de désignation comporte une tablette tactile qui comprend une surface tactile montée sur une structure de support fixe, par l'intermédiaire de moyens élastiques, et un micro-interrupteur de validation disposé de manière à détecter la position enfoncée de la surface tactile. Ainsi, la désignation d'une plage ou d'une zone sensible est réalisée par le déplacement d'un doigt sur la surface tactile de ce dispositif de désignation et la validation est obtenue par une pression accrue de ce doigt sur ladite surface tactile.

Ce dispositif de dialogue connu présente une fiabilité réduite, notamment en ce qui concerne la désignation et la validation d'une plage ou zone sensible, en particulier lorsque l'aérodyne se trouve dans une zone de turbulences. En effet, dans ce cas, en raison des secousses possibles, il peut être difficile d'amener le doigt exactement à l'endroit précis qui est représentatif sur l'écran d'une plage ou zone devant être désignée. De plus, un geste un peu brusque d'un pilote, notamment à la suite de secousses, risque de provoquer la validation (surface tactile enfoncée) d'une plage ou zone qu'il ne souhaitait pas valider.

En outre, par le brevet FR-2 743 921, on connaît un dispositif d'aide à la navigation aérienne d'un avion, qui fait partie d'un système global de contrôle de l'avion. Ce système comporte notamment un système de gestion de vol du type FMS ("Flight Management System") et des interfaces de dialogue avec le pilote qui comprennent, entre autres, des écrans d'affichage d'informations de navigation et de pilotage et une console d'affichage et d'entrée de données du type MCDU ("Multipurpose Control Display Unit"). Cette console MCDU comporte un clavier exclusivement destiné à entrer des données, un écran et des moyens permettant de sélectionner des zones affichées sur l'écran et d'activer la zone sélectionnée pour déclencher des opérations qui sont en rapport avec ce qui est affiché. Ces moyens de sélection et d'activation permettent :
- de déplacer un curseur dans un menu affiché sur l'écran pour sélectionner une zone proposée par ce menu, zone qui passe par exemple en surbrillance lors du passage du curseur sur cette zone ; et
- d'activer une zone sélectionnée.

Comme moyen de sélection (c'est-à-dire de désignation), ce document connu prévoit des touches de déplacement ou l'utilisation d'un écran tactile ou d'une tablette tactile à côté de l'écran.

L'utilisation d'un écran ou d'une tablette tactile pose de nouveau le problème de la fiabilité de la désignation.

De plus, pour chacun des dispositifs divulgués par les brevets FR-2 677 149 et FR-2 743 921 précités, la panne du moyen de désignation ou du moyen de validation empêche le fonctionnement du dispositif correspondant.

Par ailleurs, le document US-6 112 141 décrit un poste de pilotage d'un avion qui comporte notamment une pluralité d'écrans, une unité de contrôle multifonctionnelle, deux claviers (ou des systèmes vocaux) exclusivement destinés à entrer des données, et une interface de dialogue. Cette interface de dialogue comprend au moins deux dispositifs de commande de curseur identiques, sous forme de boules ou sphères de commande, dont l'un est destiné au pilote et l'autre au copilote. Ces boules de commande permettent de déplacer en continu les curseurs correspondants sur les écrans pour désigner des zones sensibles.

Il existe également un problème de fiabilité de la désignation des objets sensibles, lors de secousses de l'avion en particulier, en raison de cette commande en continu des curseurs.

De plus, lors de la panne d'un desdits dispositifs de commande de curseur, par exemple celui du pilote (bien que dans ce cas les fonctions puissent éventuellement être commandées par l'autre dispositif de commande de curseur, en l'occurrence celui du copilote), le pilote ne possède plus aucune maîtrise sur les commandes correspondantes, ce qui est bien entendu très gênant.

Par ailleurs, on connaît :
- par un article intitulé "Method for Optimal User Interface Object Navigation" et paru dans la publication "IBM Technical Disclosure Bulletin", volume 37, n° 4A, page 501, un dispositif de dialogue qui prévoit un ordre particulier pour réaliser un déplacement discret d'un curseur ;
- par un article intitulé "Automated Mouse Pointer Movement Function" et paru dans la publication "IBM Technical Disclosure Bulletin", volume 36, n° 4, pages 433-435, une méthode de type logiciel de déplacement de curseur, destinée à remédier à des inconvénients (vitesse réduite, besoin de place, ...) d'une souris d'ordinateur. Selon cette méthode, on déplace le curseur d'un objet à un autre objet de manière à désigner successivement, de façon cyclique, tous les objets pouvant être désignés d'une fenêtre de l'ordinateur ;
- par le document US-5 923 307, un système d'affichage comprenant des moyens pour configurer une pluralité de zones d'affichage ;
- par le document US-5 548 304, une méthode de contrôle de curseur sur un affichage ; et
- par le document US-6 072 473, un dispositif de dialogue qui comporte un clavier pour entrer des données et un dispositif de commande de curseur comprenant une surface tactile qui permet d'engendrer un déplacement discret d'un curseur.

La présente invention a pour objet de remédier aux inconvénients précités. Elle concerne un dispositif de dialogue du type précité qui, entre autres avantages, est particulièrement fiable quelles que soient les conditions de vol et notamment lors de turbulences, et qui permet de continuer à réaliser le dialogue pilote/système, même en cas de panne de certains de ses éléments.

A cet effet, l'invention propose un dispositif de dialogue tel que décrit dans la revendication 1.

Ainsi, comme grâce à l'invention, l'opérateur a à sa disposition deux moyens de commande (dispositif de commande de curseur et clavier), en cas de panne de l'un de ces moyens de commande, il peut toujours utiliser l'autre moyen de commande pour faire exécuter des fonctions, ce qui augmente bien entendu la fiabilité dudit dispositif de dialogue.

De plus, comme le clavier permet de réaliser un déplacement discret du curseur, c'est-à-dire qu'à chaque actionnement de la touche de déplacement de curseur, le curseur désigne un autre objet sensible, tous les objets sensibles existant pouvant ainsi être désignés (cette désignation de tous les objets sensibles étant de préférence réalisée de façon cyclique), il est possible de désigner exactement l'objet sensible que l'on souhaite mettre en évidence, même en cas de turbulences, puisqu'aucun actionnement ou déplacement continu précis n'est nécessaire.

En outre, comme le dispositif de commande de curseur et le clavier sont des moyens de commande complémentaires, mais très différents l'un de l'autre, l'opérateur peut choisir celui qui lui convient le mieux, soit pendant tout le vol, soit de façon temporaire en fonction des phases et/ou des conditions de vol, ce qui apporte une grande souplesse d'utilisation et augmente le confort de l'opérateur dans l'exécution de ses tâches.

Par ailleurs, comme le clavier existe déjà sur l'aéronef, pour entrer des données dans le système, le dispositif de dialogue conforme à l'invention n'augmente pas l'encombrement.

Ledit dispositif de dialogue comporte également une pluralité d'écrans, dont au moins certains comportent au moins une fenêtre interactive, et ledit clavier comporte des touches de fonction associées à certaines desdites fonctions du système et permettant, lorsqu'elles sont actionnées, d'amener le curseur directement sur l'objet sensible associé à la touche de fonction qui est actionnée, quel que soit l'écran sur lequel est visualisé ledit objet sensible. Ceci permet à l'opérateur d'accéder directement à certaines fonctions par une seule action (enfoncement de la touche de fonction correspondante), sans qu'il ait à connaître l'emplacement préalable du curseur. Ces caractéristiques sont bien entendu particulièrement avantageuses dans des situations critiques ou d'urgence et sont réservées à des fonctions particulières telles que les fonctions devant être réalisées lors de la panne d'un élément important de l'aéronef par exemple.

En outre, avantageusement, le dispositif de dialogue conforme à l'invention comporte une pluralité d'écrans, dont au moins certains comportent au moins une fenêtre interactive, et ledit dispositif de commande de curseur et ledit clavier comportent, chacun, un moyen actionnable (par exemple une touche de fonction pour le clavier) pour amener, écran par écran, le curseur d'un écran à un autre écran.

Par ailleurs, de façon avantageuse, chaque fenêtre interactive est divisée en une pluralité de zones, dont chacune comporte au moins un élément sensible, ce qui permet notamment d'utiliser une touche de déplacement placement de curseur auxiliaire du clavier, engendrant un déplacement discret du curseur de zone à zone.

En outre, avantageusement :
- chaque écran comporte une zone par défaut, qui est située sur l'une des fenêtres interactives de l'écran, et sur laquelle arrive le curseur après un changement d'écran commandé à l'aide du clavier ; et/ou
- chaque fenêtre interactive comporte une zone par défaut, sur laquelle arrive le curseur après un changement de fenêtre commandé à l'aide du clavier ; et/ou
- chaque zone par défaut comporte un objet sensible par défaut, sur lequel arrive le curseur après un changement de zone.

Par ailleurs, comme indiqué précédemment, ledit dispositif de commande de curseur comporte un moyen pour incrémenter des valeurs alphanumériques dans au moins un champ de saisie de valeurs d'au moins l'une desdites fenêtres interactives. Ainsi, en cas d'indisponibilité ou de panne du clavier, l'opérateur est toujours en mesure d'entrer des données dans ledit système. Pour ce faire, le pilote peut en particulier afficher un pavé alphanumérique sur une fenêtre à l'aide d'une touche du dispositif de commande de curseur, afin de saisir des données par désignation avec le curseur.

De préférence, le dispositif de dialogue conforme à l'invention comporte deux dispositifs de commande de curseur et deux claviers, un dispositif de commande de curseur et un clavier étant destinés au pilote de l'aéronef, et l'autre dispositif de commande de curseur et l'autre clavier étant destinés au copilote de l'aéronef.

Par ailleurs, dans un mode de réalisation particulier, ledit dispositif de dialogue comporte huit écrans, dont trois sont destinés au pilote de l'aéronef, trois autres sont destinés au copilote de l'aéronef et deux sont communs audit pilote et audit copilote.

La présente invention concerne également un système d'aéronef, tel que précité, qui est remarquable en ce qu'il comporte le dispositif de dialogue conforme à l'invention, pour permettre un dialogue avec un opérateur, en particulier un pilote, dudit aéronef.

Les figures du dessin annexé feront bien comprendre comment l'invention peut être réalisée. Sur ces figures, des références identiques désignent des éléments semblables.

La figure 1 est le schéma synoptique d'un dispositif de dialogue conforme à l'invention, qui est associé à un système d'un aéronef.

La figure 2 montre schématiquement un mode de réalisation préféré d'un dispositif de dialogue conforme à l'invention.

Les figures 3 et 4 montrent plus en détail respectivement deux dispositifs de commande de curseur faisant partie du dispositif de dialogue de la figure 2.

La figure 5 illustre schématiquement une fenêtre interactive divisée en zones.

La figure 6 illustre schématiquement une zone d'une fenêtre interactive, qui est munie d'objets sensibles.

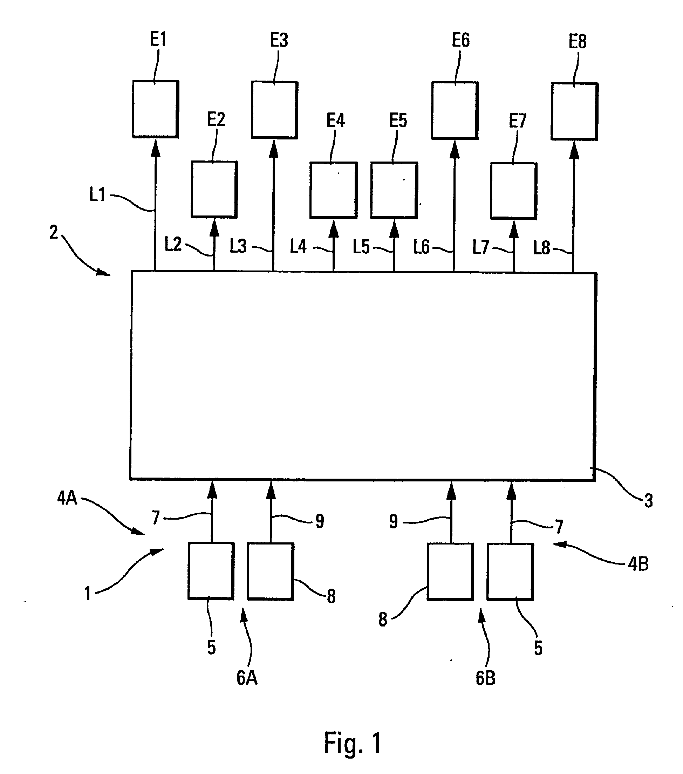

Le dispositif de dialogue 1 conforme à l'invention et représenté schématiquement sur la figure 1 est embarqué sur un aéronef, en particulier un avion de transport civil, non représenté et est, de préférence, agencé dans le poste de pilotage dudit aéronef. Ce dispositif de dialogue 1 est destiné à permettre le dialogue entre au moins un opérateur de l'aéronef, notamment un pilote, et un système connu, par exemple un système de gestion de vol.

Le dispositif de dialogue 1 est associé à un ensemble 2 qui comporte un calculateur 3 et une pluralité d'écrans E1 à E8 qui sont reliés respectivement, par l'intermédiaire de liaisons L1 à L8, audit calculateur 3.

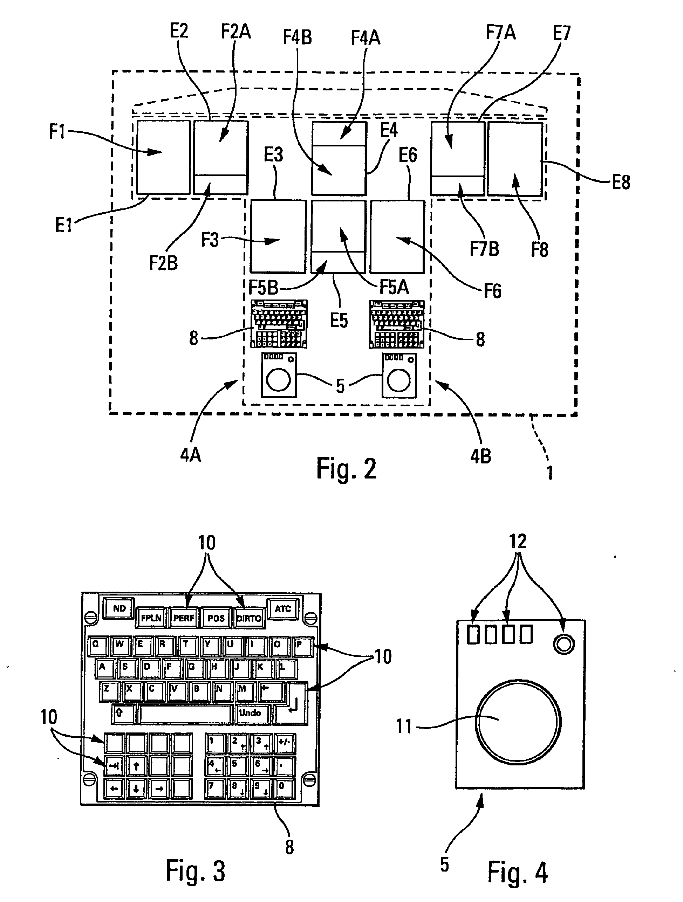

Dans le mode de réalisation préféré (mais non exclusif) représenté sur les figures 1 et 2, et comme on le voit plus précisément sur la figure 2, l'ensemble 2 est dédoublé, une partie dudit système étant destinée au pilote, la partie gauche 4A par exemple, et l'autre partie (partie droite 4B) étant destinée au copilote. Avec une telle répartition, de préférence, les écrans E1 à E3 sont destinés au pilote, les écrans E6 à E8 au copilote et les écrans E4 et E5 sont communs aux deux.

Lesdits écrans E1, E3, E6 et E8 comportent chacun une fenêtre de visualisation respectivement F1, F3, F6 et F8, tandis que lesdits écrans E2, E4, E5 et E7 comportent chacun deux fenêtres de visualisation F2A et F2B, F4A et F4B, F5A et F5B, et F7A et F7B. Il est bien entendu envisageable que certains écrans comprennent plus de deux fenêtres.

A titre d'illustration, on peut afficher :
- sur les fenêtres F1 et F8, des informations usuelles d'un écran du type "Primary Flight", telles qu'un horizon artificiel qui s'incline lorsque l'avion s'incline ;
- sur les fenêtres F2A et F7A, des informations de navigation ;
- sur les fenêtres F2B et F7B, des informations de surveillance ;
- sur les fenêtres F3 et F6, des informations relatives à un dispositif d'affichage MFD ("Multi Function Display") ;
- sur la fenêtre F4A, des informations relatives aux moteurs ;
- sur la fenêtre F4B, des informations de procédures ;
- sur la fenêtre F5A, des informations sur des systèmes de l'aéronef ; et
- sur la fenêtre F5B, des informations complémentaires.

Les écrans E1 à E8 sont du type connu à cristaux liquides LCD ("Liquid Crystal Display").

De plus, chacune desdites fenêtres F1 à F8 est une fenêtre dite "interactive", c'est-à-dire une fenêtre qui comporte des objets (plages, valeurs alphanumériques, ...) qui sont sensibles à la présence d'un curseur CU, chacun desdits objets sensibles OS étant associé à une fonction particulière susceptible d'être exécutée. Ledit curseur CU peut être déplacé par un dispositif de commande de curseur 5.

Le dispositif de dialogue 1 comporte deux dispositifs de commande de curseur 5 identiques, dont l'un fait partie d'un ensemble de commandes 6A du pilote et l'autre fait partie d'un ensemble de commandes 6B du copilote. Lesdits dispositifs de commande de curseur 5 sont reliés par l'intermédiaire de liaisons 7 au calculateur 3.

L'actionnement d'un desdits dispositifs 5 permet de déplacer le curseur CU de manière à l'amener sur un objet sensible OS afin de le désigner. Lorsqu'un objet sensible OS est désigné, il est mis en valeur, en particulier par un changement d'apparence tel qu'un changement de couleur ou une surbrillance. L'exécution d'une fonction associée à un objet sensible OS est déclenchée par la validation (à l'aide du dispositif 5) de l'objet sensible OS préalablement désigné.

Chacun desdits ensembles de commande 6A comporte, de plus, un clavier 8 qui est relié par une liaison 9 au calculateur 3 et qui comporte des touches 10, comme représenté sur la figure 3, qui permettent, de façon usuelle, audit opérateur d'entrer des données alphanumériques dans ledit calculateur 3.

Selon l'invention, chacun desdits dispositifs de commande de curseur 5 comprend, comme représenté schématiquement sur la figure 4 :
- un moyen de déplacement 11 actionnable, de préférence sous forme d'une boule de commande ou souris sphérique, qui est susceptible de déplacer en continu le curseur CU sur lesdites fenêtres F1 à F8 de manière à désigner un objet sensible OS ; et
- un moyen de validation actionnable, par exemple une touche 12, qui est susceptible de valider un objet sensible OS qui est désigné par ledit curseur CU de manière à faire exécuter la fonction qui est associée audit objet sensible OS.

Chacun desdits dispositifs de commande de curseur 5 peut comporter d'autres touches, boutons ou éléments de commande destinés à des fonctions supplémentaires. Tous ces touches, boutons et éléments de commande sont désignés par la référence générale 12 sur la figure 4.

En particulier, chaque dispositif 5 peut comporter :
- une touche 12 d'appel d'une valeur alphanumérique ;
- un élément de commande 12 pour incrémenter des valeurs alphanumériques dans au moins un champ de saisie de valeurs d'au moins l'une desdites fenêtres interactives F1 à F8. Ainsi, en cas d'indisponibilité ou de panne de son clavier 8, un opérateur (le pilote ou le copilote) est toujours en mesure d'entrer des données dans ledit calculateur 3 ; et
- un élément de commande 12, par exemple une molette, permettant de déplacer le curseur CU dans un menu et de faire défiler une liste particulière.

De plus, selon l'invention, ledit clavier 8 comporte, parmi les touches 10 :
- au moins une touche de déplacement de curseur, par exemple les touches "←", "↓", "↑" et "→", permettant d'engendrer un déplacement discret du curseur CU, objet sensible OS par objet sensible OS, sur une fenêtre déterminée ;
- au moins une touche de déplacement auxiliaire, permettant de déplacer le curseur CU de fenêtre à fenêtre ; et
- au moins une touche de validation, permettant de valider un objet sensible OS qui est désigné par ledit curseur CU de manière à faire exécuter la fonction associée audit objet sensible OS.

Ainsi, grâce à l'invention, chacun des opérateurs (pilote, copilote) a à sa disposition deux moyens de commande (dispositif de commande de curseur 5 et clavier 8), de sorte qu'en cas de panne de l'un de ses moyens de commande 5, 8, il peut toujours utiliser l'autre moyen de commande pour faire exécuter des fonctions, ce qui augmente bien entendu la fiabilité dudit dispositif de dialogue 1.

De plus, comme le clavier 8 permet de réaliser un déplacement discret du curseur CU, c'est-à-dire qu'à chaque actionnement de la touche de déplacement de curseur, le curseur CU désigne un autre objet sensible OS, tous les objets sensibles OS existant pouvant ainsi être désignés (cette désignation de tous les objets sensibles étant de préférence réalisée de façon cyclique), il est possible de désigner exactement l'objet sensible OS que l'on souhaite mettre en évidence, même en cas de turbulences, puisqu'aucun actionnement ou déplacement continu précis n'est nécessaire.

En outre, comme le dispositif de commande de curseur 5 et le clavier 8 sont des moyens de commande complémentaires, mais très différents l'un de l'autre, chaque opérateur (pilote, copilote) peut choisir celui qui lui convient le mieux, soit pendant tout le vol, soit de façon temporaire en fonction des phases et/ou des conditions de vol, ce qui apporte une grande souplesse d'utilisation et augmente le confort desdits pilote et copilote dans l'exécution de leurs tâches.

Par ailleurs, comme le clavier 8 existe déjà sur l'aéronef, pour entrer des données dans le calculateur 3, le dispositif de dialogue 1 conforme à l'invention n'augmente pas l'encombrement.

En outre, le clavier 8 comporte des touches de fonction, par exemple les touches "FPLN", "PERF", "DIRTO", "ATC" ("Air Trafic Control"), qui sont associées à certaines desdites fonctions et permettent, lorsqu'elles sont actionnées, d'amener le curseur CU directement sur l'objet sensible OS associé à la touche de fonction qui est actionnée, quel que soit l'écran E1 à E8 sur lequel est visualisé ledit objet sensible OS. Ceci permet à l'opérateur d'accéder directement à certaines fonctions par une seule action (enfoncement de la touche de fonction correspondante), sans qu'il ait à connaître l'emplacement préalable du curseur CU. Ces caractéristiques sont bien entendu particulièrement avantageuses dans des situations critiques ou d'urgence et sont réservées à des fonctions particulières telles que celles mises en oeuvre lors de la panne d'un élément important (moteur, ...) de l'aéronef par exemple.

Par ailleurs, sur chaque ensemble de commandes 6A et 6B, ledit dispositif de commande de curseur 5 et ledit clavier 8 comportent, chacun, un moyen actionnable, de préférence une touche de fonction, pour amener, écran par écran, le curseur CU d'un écran à un autre écran. De préférence, ce changement d'écran est cyclique. Ainsi, à titre d'exemple :
- pour la partie 4A, la commutation peut être réalisée dans l'ordre suivant : E1, E2, E3, E4, E5, E1, E2, ... ; et
- pour la partie 4B, la commutation peut être réalisée dans l'ordre suivant : E4, E5, E6, E7, E8, E4, E5, ...

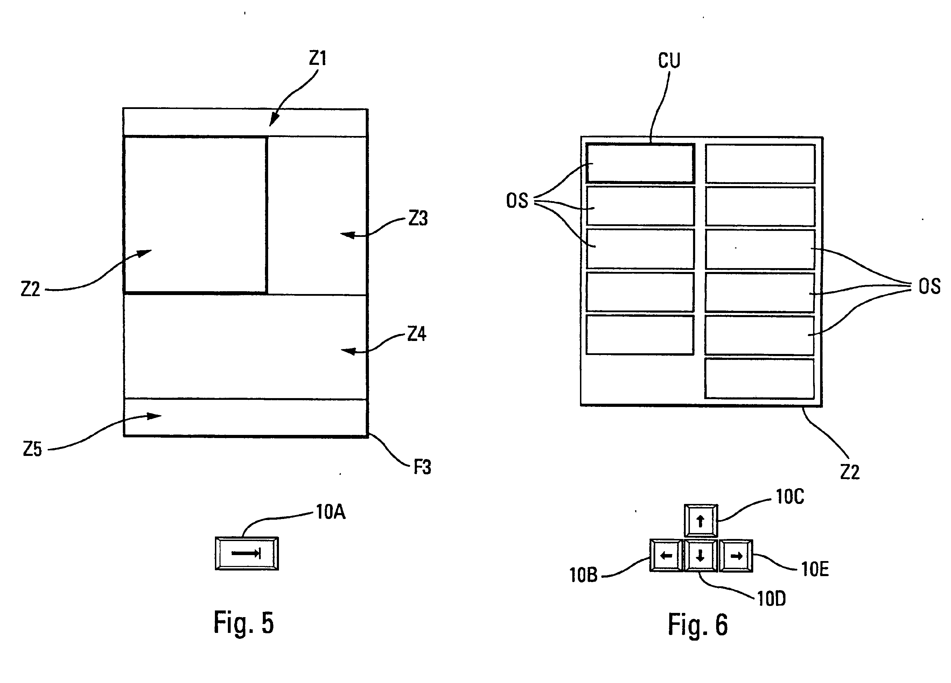

Selon l'invention, chaque fenêtre interactive, comme représenté à titre d'exemple pour la fenêtre interactive F3 sur la figure 5,est divisée en une pluralité de zones Z1 à Z5, dont chacune comporte au moins un élément sensible OS, et le clavier 8 comporte une touche de déplacement de curseur auxiliaire (touche de tabulation 10A par exemple), pour engendrer un déplacement discret du curseur CU, de zone à zone.

De plus, selon l'invention :
- chaque écran E1 à E8 comporte une zone par défaut, qui est située sur l'une des fenêtres interactives de l'écran, et sur laquelle arrive le curseur CU après un changement d'écran commandé à l'aide du clavier 8 ;
- chaque fenêtre interactive F1 à F8 comporte une zone par défaut, sur laquelle arrive le curseur après un changement de fenêtre commandé à l'aide du clavier 8, telle que la zone Z2 pour la fenêtre F3 représentée sur la figure 5 par exemple. Le clavier 8 réalise de façon directe, de préférence, uniquement des changements de zones (zone à zone), les changements de fenêtre étant obtenus indirectement par le passage de la dernière zone d'une fenêtre, par exemple la fenêtre F5A, à la première zone d'une fenêtre suivante, par exemple la fenêtre F5B. Bien entendu, lorsqu'un écran, comme l'écran E3, ne comporte qu'une seule fenêtre F3, la zone par défaut dudit écran E3 correspond à la zone par défaut de cette fenêtre F3 unique ; et
- chaque zone par défaut comporte un objet sensible OS par défaut, sur lequel arrive le curseur CU après un changement de zone, comme représenté sur la figure 6 pour la zone Z2 de la figure 5. Comme indiqué précédemment, lorsque le curseur CU arrive sur un objet sensible OS, ce dernier est désigné ou "marqué". Sur la figure 6, on a représenté ce marquage, par exemple une surbrillance, par un trait de contour plus épais de l'objet sensible OS désigné. Quant au curseur CU, sa présence est simplement rappelée par un trait de référence arrivant à l'objet sensible OS.

De plus, dans chaque zone Z1 à Z5, les objets sensibles OS sont disposés de manière adaptée aux touches du clavier 8, destinées au déplacement discret du curseur CU, d'un objet sensible OS à un autre.

Dans l'exemple de la figure 6, les objets sensibles OS sont disposés en colonnes et lignes de sorte que, parmi les touches 10 du clavier 8, les touches 10B à 10E à flèche de direction "←", "↑", "↓" et "→" suffisent pour commander le déplacement du curseur CU.

Si les objets sensibles OS sont disposés suivant une seule direction (ligne ou colonne), deux touches suffisent, c'est-à-dire les touches "←" et "→" en cas de disposition en ligne et les touches "↑" et "↓" en cas de disposition en colonne, ce qui permet de faciliter la commande de déplacement du curseur CU.

## Revendications

1. Dispositif de dialogue entre au moins un opérateur d'un aéronef et au moins un système dudit aéronef, ledit dispositif de dialogue (1) comportant :
- une pluralité d'écrans (E1 à E8) dont au moins certains comportent au moins une fenêtre interactive (F1 à F8);
- au moins deux fenêtres de visualisation interactives (F1 à F8) qui peuvent être visualisées sur au moins un écran (E1 à E8) et qui comprennent chacune au moins un objet sensible (OS) associé à l'une d'une pluralité de fonctions, lesdites fonctions étant déclenchées par ledit dispositif de dialogue (1) sous l'action de l'opérateur en vue de leur exécution ;
- au moins un dispositif de commande de curseur (5) qui est actionnable par ledit opérateur et qui comprend :
. au moins un moyen de déplacement actionnable (11) permettant à l'opérateur d'engendrer un déplacement continu d'un curseur (CU) sur lesdites fenêtres interactives (F1 à F8) de manière à désigner un objet sensible (OS) ; et
. au moins un moyen de validation actionnable (12) permettant à l'opérateur de valider un objet sensible (OS) qui est désigné par l'intermédiaire dudit curseur (CU) de manière à faire exécuter la fonction qui est associée audit objet sensible (OS) ; et
- au moins un clavier (8) comportant des touches (10) qui permettent audit opérateur d'entrer des données alphanumériques dans ledit système (1), ledit clavier (8) comportant également au moins une touche de validation (10) permettant à l'opérateur de valider un objet sensible (OS) qui est désigné par l'intermédiaire dudit curseur (CU) de manière à faire exécuter la fonction associée audit objet sensible (OS),
**caractérisé en ce que :**
- ledit dispositif de commande de curseur (5) comporte, de plus, un moyen (12) pour incrémenter des valeurs alphanumériques dans au moins un champ de saisie de valeurs d'au moins l'une desdites fenêtres interactives (F1 à F8) de manière à permettre d'entrer des données ;
- ledit clavier (8) comporte de plus :
au moins une touche (10) de déplacement de curseur, permettant à l'opérateur d'engendrer un déplacement discret du curseur (CU), objet sensible (OS) par objet sensible (OS), sur une fenêtre (F1 à F8) déterminée de sorte qu'à chaque actionnement de cette touche (10) de déplacement de curseur, le curseur (CU) désigne un autre objet sensible (OS), tous les objets sensibles (OS) existant pouvant être ainsi désignés ; et
des touches de fonction (10) associées à certaines desdites fonctions du système (1) et permettant, lorsqu'elles sont actionnées, d'amener le curseur (CU) directement sur l'objet sensible (OS) associé à la touche de fonction (10) qui est actionnée, quel que soit l'écran (E1 à E8) sur lequel est visualisé ledit objet sensible (OS).
. au moins un moyen (10) de déplacement auxiliaire, permettant à l'opérateur de déplacer le curseur (CU) de fenêtre à fenêtre ; et
- ledit dispositif de commande de curseur (5) et ledit clavier (8) sont deux moyens de commande différents de sorte que, en cas de panne de l'un de ces moyens de commande, l'opérateur peut toujours utiliser l'autre moyen de commande.

2. Dispositif selon la revendication 1, **caractérisé en ce qu'**il comporte une pluralité d'écrans (E1 à E8), dont au moins certains comportent au moins une fenêtre interactive (F1 à F8), et **en ce que** ledit dispositif de commande de curseur (5) et ledit clavier (8) comportent, chacun, un moyen actionnable pour amener, écran par écran, le curseur (CU) d'un écran à un autre écran.

3. Dispositif selon l'une quelconque des revendications 1 à 2, **caractérisé en ce que** chaque fenêtre interactive (F3) est divisée en une pluralité de zones (Z1 à Z5), dont chacune comporte au moins un élément sensible (OS), et **en ce que** ledit clavier (8) comporte, de plus, une touche de déplacement de curseur auxiliaire pour engendrer un déplacement discret du curseur (CU) de zone à zone.

4. Dispositif selon la revendication 3,
**caractérisé en ce que :**
- chaque écran (E1 à E8) comporte une zone par défaut, qui est située sur l'une des fenêtres interactives (F1 à F8) de l'écran, et sur laquelle arrive le curseur (CU) après un changement d'écran commandé à l'aide du clavier (8) ;
- chaque fenêtre interactive (F3) comporte une zone par défaut (Z2), sur laquelle arrive le curseur (CU) après un changement de fenêtre commandé à l'aide du clavier (8) ; et
- chaque zone par défaut (Z2) comporte un objet sensible par défaut, sur lequel arrive le curseur (CU) après un changement de zone.

5. Dispositif selon l'une quelconque des revendications précédentes,
**caractérisé en ce qu'**il comporte deux dispositifs de commande de curseur (5) et deux claviers (8), un dispositif de commande de curseur (5) et un clavier (8) étant destinés au pilote de l'aéronef, et l'autre dispositif de commande de curseur (5) et l'autre clavier (8) étant destinés au copilote de l'aéronef.

6. Dispositif selon l'une quelconque des revendications précédentes,
**caractérisé en ce qu'**il comporte huit écrans (E1 à E8), dont trois (E1 à E3) sont destinés au pilote de l'aéronef, trois autres (E6 à E8) sont destinés au copilote de l'aéronef et deux (E4, E5) sont communs audit pilote et audit copilote.

7. Système d'aéronef,
**caractérisé en ce qu'**il comporte un dispositif de dialogue (1) tel que celui spécifié sous l'une quelconque des revendications 1 à 6, pour permettre un dialogue entre ledit système et un opérateur dudit aéronef.

## Claims

1. A device for dialog between at least one operator of an aircraft and at least one system of said aircraft, said dialog device (1) including:
- multiple screens (E1 to E8), of which at least some include at least one interactive window (F1 to F8);
- at least two interactive windows (F1 to F8) which can be displayed on at least one screen (E1 to E8), and each of which includes at least one responsive object (OS) which is associated with one of multiple functions, said functions being capable of being initiated by said dialog device (1) under the action of the operator so that they are executed;
- at least one cursor control device (5), which is capable of being controlled by said operator, and which includes:
· at least one actuatable displacement means (11), enabling the operator to cause a continuous displacement of a cursor (CU) on said interactive windows (F1 to F8), in order to designate a responsive object (OS); and
· at least one actuatable confirmation means (12), enabling the operator to confirm a responsive object (OS) which is designated using said cursor (CU), in order to initiate execution of the function which is associated with said responsive object (OS); and
- at least one keyboard (8) including keys (10) which enable said operator to enter alphanumeric data into said system (1), said keyboard (8) including also at least one confirmation key (10), making it possible to confirm a responsive object (OS) which is designated by said cursor (CU), in order to initiate execution of the function which is associated with said responsive object (OS),
**characterized in that :**
- said cursor control device (5) further includes a means (12) for incrementing alphanumeric values in at least one value input field of at least one of said interactive windows (F1 to F8) in order to enter data;
- said keyboard (8) includes, additionally:
• at least one cursor displacement key (10), enabling the operator to cause a discrete displacement of the cursor (CU), responsive object (OS) by responsive object (OS), on a specified window (F1 to F8) in such a manner that, at each actuation of this cursor displacement key (10), the cursor (CU) designates a different responsive object so that all existing responsive objects (OS) can thus be designated ;
• function keys (10) which are associated with certain of said system functions (1) and make it possible, when they are operated, to displace the cursor (CU) directly onto the responsive object (OS) which is associated with the function key (10) which is operated, irrespective of the screen (E1 to E8) on which said responsive object is displayed (OS); and
• at least one auxiliary displacement key (10), making it possible to displace the cursor (CU) from window to window; and
- said cursor control device (5) and said keyboard (8) are two different control means so that, in the case of failure of one of these control means, the operator can still use the other control means.

2. The device as claimed in claim 1,
**characterized in that** it includes multiple screens (E1 to E8), of which at least some include at least one interactive window (F1 to F8), and **in that** said cursor control device (5) and said keyboard (8) each include one actuatable means for displacing, screen by screen, the cursor (CU) from one screen to another.

3. The device as claimed in one of claims 1 and 2,
**characterized in that** each interactive window (F3) is divided into multiple fields (Z1 to Z5), each of which includes at least one responsive element (OS), and **in that** said keyboard (8) further includes an auxiliary cursor displacement key for causing a discrete displacement of the cursor (CU) from field to field.

4. The device as claimed in claim 3,
**characterized in that :**
- each screen (E1 to E8) includes one default field, which is situated on one of the interactive windows (F1 to F8) of the screen, and on which the cursor (CU) arrives after a change of screen under the control of the keyboard (8);
- each interactive window (F3) includes one default field (Z2), on which the cursor (CU) arrives after a change of window under the control of the keyboard (8); and
- each default field (Z2) includes one default-responsive object, on which the cursor (CU) arrives after a change of field.

5. The device as claimed in any one of the preceding claims,
**characterized in that** includes two cursor control devices (5) and two keyboards (8), one cursor control device (5) and one keyboard (8) being intended for the pilot of the aircraft, and the other cursor control device (5) and the other keyboard (8) being intended for the copilot of the aircraft.

6. The device as claimed in any one of the preceding claims,
**characterized in that** includes eight screens (E1 to E8), of which three (E1 to E3) are intended for the pilot of the aircraft, three others (E6 to E8) are intended for the copilot of the aircraft, and two (E4, E5) are common to said pilot and copilot.

7. An aircraft system,
**characterized in that** it includes a dialog device (1) as specified in any one of claims 1 to 6, to allow a dialog between said system and an operator of said aircraft.

## Patentansprüche

1. Vorrichtung zum Dialogieren mindestens einer Bedienperson eines Flugzeugs mit mindestens einem System des Flugzeugs, wobei die Dialogvorrichtung (1) Folgendes umfasst:
- eine Vielzahl von Bildschirmen (E1 bis E8), von denen zumindest einige mindestens ein interaktives Fenster (F1 bis F8) umfassen,
- mindestens zwei interaktive Visualisierungsfenster (F1 bis F8), die auf mindestens einem Bildschirm (E1 bis E8) visualisierbar sind und die jeweils mindestens ein sensibles Objekt (OS) umfassen, das einer von mehreren Funktionen zugeordnet ist, wobei die Funktionen von der Dialogvorrichtung (1) durch Einwirken der Bedienperson zwecks Ihrer Ausführung ausgelöst werden,
- mindestens ein Cursor-Steuerungsgerät (5), das von der Bedienperson betätigbar ist und Folgendes umfasst:
• mindestens ein betätigbares Bewegungsmittel (11), das es der Bedienperson ermöglicht, eine kontinuierliche Bewegung eines Cursors (CU) auf den interaktiven Fenstern (F1 bis F8) derart zu erzeugen, dass ein sensibles Objekt (OS) **gekennzeichnet** wird und
• mindestens ein betätigbares Validierungsmittel (12), das es der Bedienperson ermöglicht, ein mit dem Cursor (CU) **gekennzeichnet**es sensibles Objekt (OS) derart zu validieren, dass die dem sensiblen Objekt (OS) zugeordnete Funktion ausgeführt wird und
- mindestens eine Tastatur (8), welche mit Tasten (10) versehen ist, die es der Bedienperson ermöglichen, alphanumerische Daten in das System (1) einzugeben, wobei die Tastatur (8) außerdem mindestens eine Validierungstaste (10) umfasst, die es der Bedienperson ermöglicht, ein mit dem Cursor (CU) **gekennzeichnet**es sensibles Objekt (OS) derart zu validieren, dass die dem sensiblen Objekt (OS) zugeordnete Funktion ausgeführt wird,
**dadurch gekennzeichnet, dass:**
- das Cursor-Steuerungsgerät (5) außerdem ein Mittel (12) zur Inkrementierung der alphanumerischen Werte in mindestens einem Feld für die Eingabe von Werten von mindestens einem der interaktiven Fenster (F1 bis F8) umfasst, so dass eine Dateneingabe ermöglicht wird,
- die Tastatur (8) zusätzlich Folgendes umfasst :
• mindestens eine Cursor-Bewegungs-Taste (10), die es der Bedienperson ermöglicht, eine diskrete Bewegung des Cursors (CU), sensibles Objekt (OS) für sensibles Objekt (OS), auf einem Fenster (F1 bis F8) zu bewirken, wobei die Bewegung so bestimmt ist, dass der Cursor (CU) bei jeder Betätigung dieser Cursor-Bewegungs-Taste (10) ein anderes sensibles Objekt (OS) kennzeichnet und alle vorhandenen sensiblen Objekte (OS) auf diese Weise **gekennzeichnet** werden können,
• Funktionstasten (10), die bestimmten Funktionen des Systems (1) zugeordnet sind und die es bei Betätigung ermöglichen, dass der Cursor (CU) direkt auf das der betätigten Funktionstaste (10) zugeordnete sensible Objekt gebracht wird, unabhängig davon, auf welchem Bildschirm (E1 bis E8) das sensible Objekt visualisiert wird,
• mindestens ein zusätzliches Bewegungsmittel (10), das es der Bedienperson ermöglicht, den Cursor (CU) von Fenster zu Fenster zu bewegen und
- das Cursor-Steuerungsgerät (5) und die Tastatur (8) zwei voneinander verschiedene Steuerungsmittel sind, so dass die Bedienperson im Falle eines Ausfalls eines dieser Steuerungsmittel nach wie vor das andere Steuerungsmittel verwenden kann.

2. Vorrichtung nach Anspruch 1,
**dadurch gekennzeichnet, dass** sie eine Vielzahl von Bildschirmen (E1 bis E8) umfasst, von denen zumindest einige mindestens ein interaktives Fenster (F1 bis F8) umfassen und **dadurch**, dass das Cursor-Steuerungsgerät (5) und die Tastatur (8) jeweils ein Mittel umfassen, das dazu betätigbar ist, den Cursor (CU) Bildschirm für Bildschirm von einem Bildschirm zu einem anderen Bildschirm zu bringen.

3. Vorrichtung nach Anspruch 1 oder 2,
**dadurch gekennzeichnet, dass** jedes interaktive Fenster (F3) in eine Vielzahl von Bereichen (Z1 bis Z5) unterteilt ist, welche jeweils mindestens ein sensibles Element (OS) aufweisen und **dadurch**, dass die Tastatur (8) außerdem eine zusätzliche Cursor-Bewegungs-Taste umfasst, um eine diskrete Bewegung des Cursors (CU) von Bereich zu Bereich zu erzeugen.

4. Vorrichtung nach Anspruch 3,
**dadurch gekennzeichnet, dass:**
- jeder Bildschirm (E1 bis E8) einen Standardvorgabe-Bereich aufweist, der in einem der interaktiven Fenster (F1 bis F8) des Bildschirms angeordnet ist und auf dem der Cursor (CU) nach einem mittels der Tastatur (8) angesteuerten Wechsel des Bildschirms ankommt,
- jedes interaktive Fenster (F3) einen Standardvorgabe-Bereich (Z2) aufweist, auf dem der Cursor (CU) nach einem mittels der Tastatur (8) angesteuerten Wechsel des Fensters ankommt und
- jeder Standardvorgabe-Bereich (Z2) ein standardmäßig vorgegebenes sensibles Objekt aufweist, auf dem der Cursor (CU) nach einem Wechsel des Bereichs ankommt.

5. Vorrichtung nach einem der vorhergehenden Ansprüche,
**dadurch gekennzeichnet, dass** sie zwei Cursor-Steuerungsgeräte (5) und zwei Tastaturen (8) umfasst, wobei ein Cursor-Steuerungsgerät (5) und eine Tastatur (8) für den Piloten des Flugzeugs bestimmt sind und das andere Cursor-Steuerungsgerät (5) und die andere Tastatur (8) für den Kopiloten des Flugzeugs bestimmt sind.

6. Vorrichtung nach einem der vorhergehenden Ansprüche,
**dadurch gekennzeichnet, dass** sie acht Bildschirme (E1 bis E8) umfasst, von denen drei (E1 bis E3) für den Piloten des Flugzeugs bestimmt sind, drei weitere (E6 bis E8) für den Kopiloten des Flugzeugs bestimmt sind und zwei (E4, E5) für den Piloten und den Kopiloten gemeinsam.

7. Flugzeugsystem,
**dadurch gekennzeichnet, dass** es eine Dialogvorrichtung (1), wie die unter einem der Ansprüche 1 bis 6 spezifizierte zum Ermöglichen eines Dialogs zwischen dem System und einer Bedienperson des Flugzeugs, aufweist.
